# EUROPEAN PATENT SPECIFICATION

(11) **EP 3 382 248 B1**
(45) Date of publication and mention of the grant of the patent: **29.04.2020**
(21) Application number: 17461515.3
(22) Date of filing: 30.03.2017
(51) Int. Cl.: F16K 31/54, F16K 1/22, F16K 31/04, F16K 27/02

(54) **ROTARY ACTUATION MECHANISM**
DREHBETÄTIGUNGSMECHANISMUS
MÉCANISME D'ACTIONNEMENT ROTATIF

(43) Date of publication of application: 03.10.2018
(73) Proprietor: Hamilton Sundstrand Corporation, Charlotte, NC 28217 (US)
(72) Inventor: Kwasniewski, Pawel, 51-317 Wroclaw (PL); Trybula, Daniel, 51-317 Wroclaw (PL)
(74) Representative: Dehns

(56) References cited:
- EP-A1- 1 911 951
- EP-A1- 3 258 148
- WO-A1-2012/146898
- CN-U- 202 398 586
- DE-U- 1 814 599
- US-A- 2 704 947
- US-A- 3 575 378
- US-A- 4 008 877
- US-A1- 2005 028 871

## Description

### TECHNICAL FIELD

The present disclosure relates to a rotary actuation mechanism, more particularly but not exclusively for a rotary valve, for example a butterfly valve or ball valve.

### BACKGROUND

Rotary valves are widely known. A typical rotary valve comprises a valve element which is rotatably mounted in a flow passage. The valve element rotates between an open position in which the valve element permits flow through the flow passage and a closed position in which the valve element extends across the flow passage to block the flow through the flow passage. In a butterfly valve, the valve element is a disc which rotates between a position in which it is edge-on to the flow, providing a minimal obstruction to flow, thereby leading to a low pressure drop across the valve, and a closed position in which the disc blocks the flow passage. The valve element may be held at positions intermediate the open and closed positions in order to regulate the flow through the flow passage.

The valve element is rotated by a suitable actuation mechanism externally of the flow passage. Such actuation mechanisms may be complicated, heavy and expensive.

A rotary valve assembly having the features of the preamble of claim 1 is disclosed in DE1814599 U.

### SUMMARY

The present invention provides a rotary valve assembly as set forth in claim 1.

In various embodiments, the first element, i.e. the element attached to the drive nut is slidably received within the second element.

The telescopic element may comprise a bearing between the first and second elements. The bearing may be a sliding bearing. In various embodiments, the bearing may be a low friction liner.

The drive nut may comprise a mounting pin projecting therefrom, with the first element being rotationally mounted over the mounting pin.

The second element may be rotationally fixedly coupled with a coupling portion of a drive shaft of the rotary element.

In various embodiments, a non-circular section coupling, for example a D-shaped, square or splined coupling, may be provided between the second element and the coupling portion of the rotary drive shaft.

The valve element may comprise a disc.

The actuator portion may be integral with the duct portion. In other embodiments, however, the actuator portion may be separate from and mounted to the duct portion.

The valve assembly may further comprise a cover closing the actuation portion.

The cover may comprise an electrical connector for connection of a power supply to the electric drive motor.

The duct portion of the valve housing may comprise mounting flanges at opposed ends thereof.

### BRIEF DESCRIPTION OF DRAWINGS

An embodiment of this disclosure will now be described by way of example only with reference to the accompanying drawings in which:

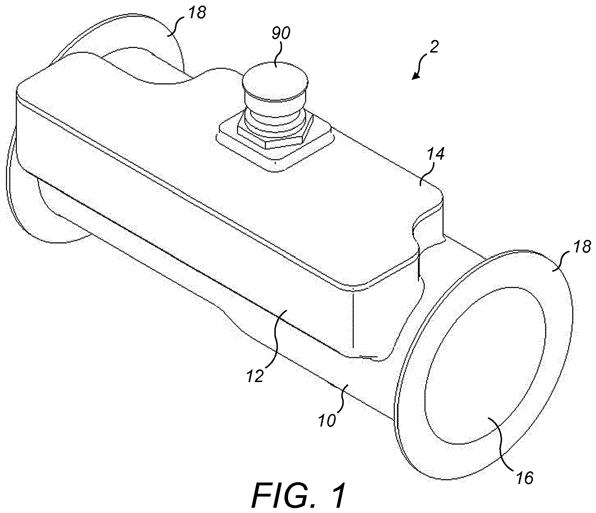

Figure 1 shows a perspective view of a valve assembly incorporating an actuation mechanism in accordance with this disclosure;

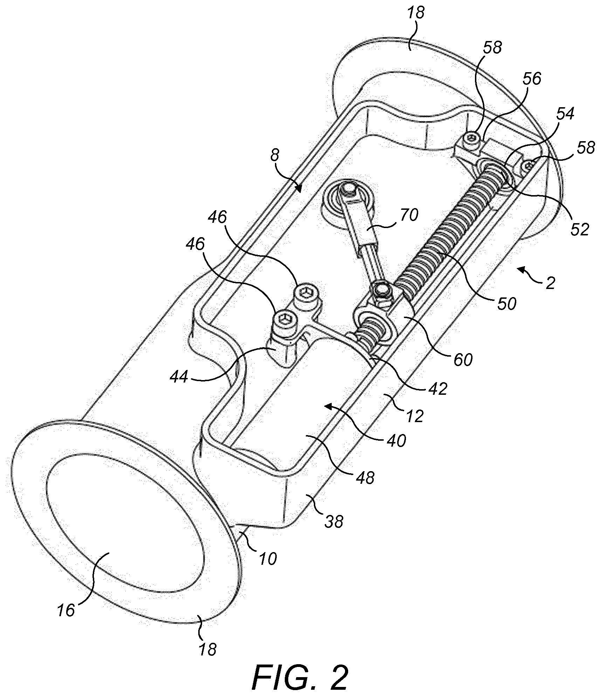

Figure 2 shows the valve assembly of Figure 1 with a cover removed;

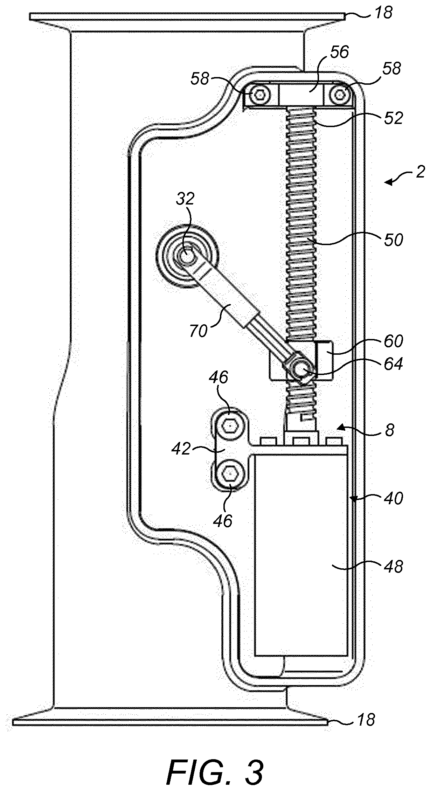

Figure 3 shows a plan view of Figure 2;
Figure 4 shows a vertical cross-sectional view along the line A-A of Figure 3;
Figure 5 shows a perspective view of the valve assembly components removed from the valve housing, with the valve in a closed position;
Figure 6 shows a side view of Figure 5;
Figure 7 shows a top plan side view of Figure 5;
Figure 8 shows a perspective view of the valve assembly components removed from the valve housing, with the valve in an open position;
Figure 9 shows a side view of Figure 8;
Figure 10 shows a top plan side view of Figure 8;
Figure 11 shows a plan view of a valve assembly with the valve in an intermediate position; and
Figure 12 is a sectional view taken along the line A-A of Figure 11.

### DETAILED DESCRIPTION

With reference to the Figures, a rotary valve assembly 2 comprises a valve housing 4, a rotary valve element 6 and a rotary actuation mechanism 8 for rotating the valve element 6.

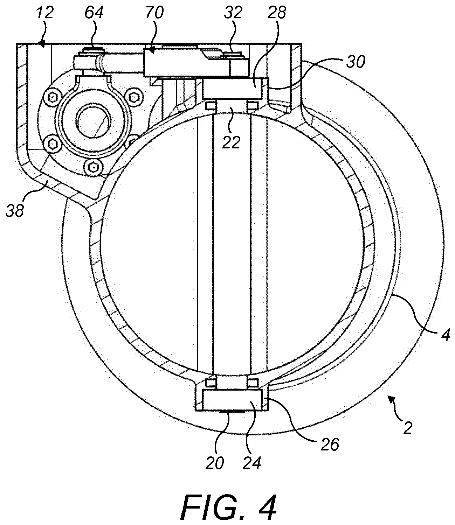

The valve housing 4 comprises a duct portion 10 and an actuator portion 12. As can be seen in Figure 4 for example, the valve element 6 is received within the duct portion 10 and the actuation mechanism 8 received within the actuator portion 12. The actuator portion 12 is closed by a cover 14 as will be described further below.

The duct portion 10 defines a flow passage 16 and mounting flanges 18 at opposed ends thereof to allow it to be mounted to adjacent ducts by coupling means not illustrated. For example the flanges 18 and flanges of the adjacent ducts may be provided with a series of holes for receiving mounting bolts or the like. Alternatively, the mounting flanges 18 may be clamped to flanges of the adjacent ducts by external clamps.

In this embodiment, the duct portion 10 and the actuator portion 12 of the valve housing 4 are formed integrally, for example by a casting process such as investment casting, although a multi-part construction also falls within the scope of this disclosure. The material of the valve housing 4 may be chosen in accordance with the intended application. It may, for example, by aluminium or steel.

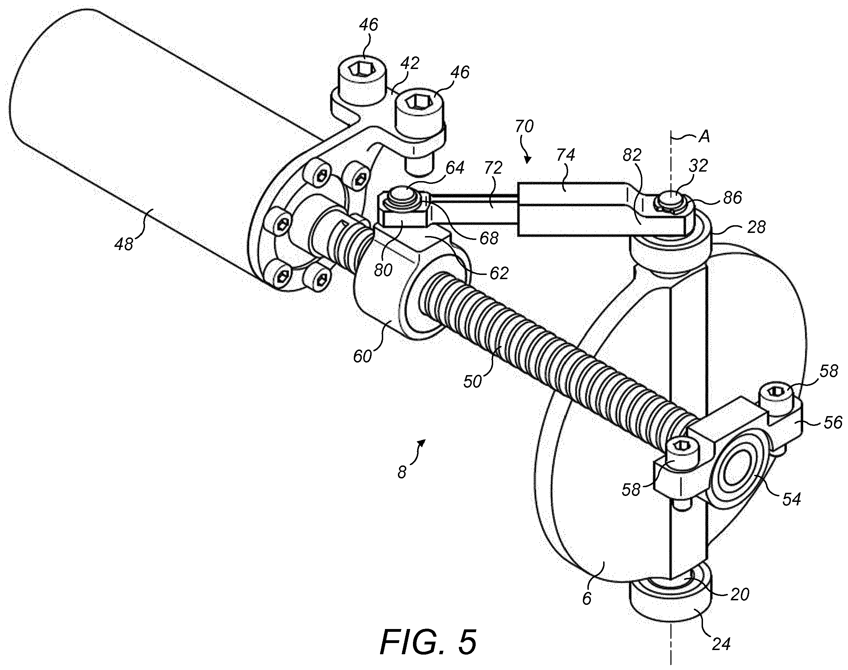

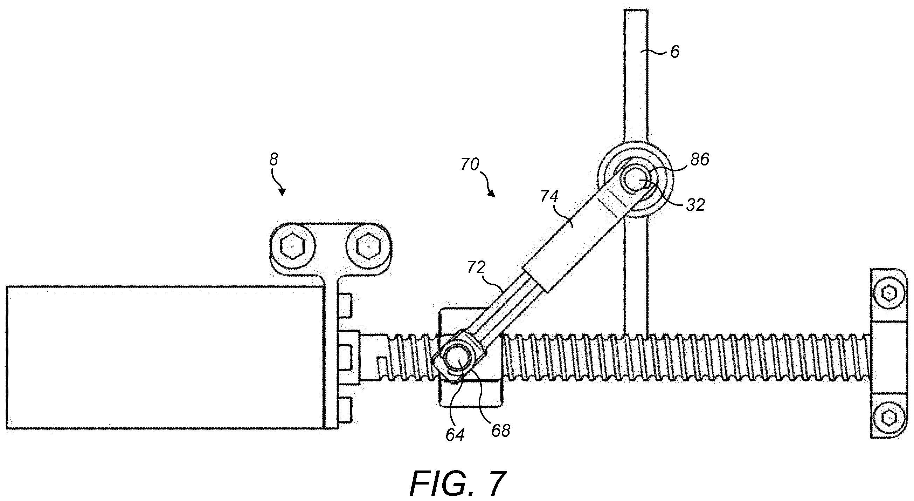

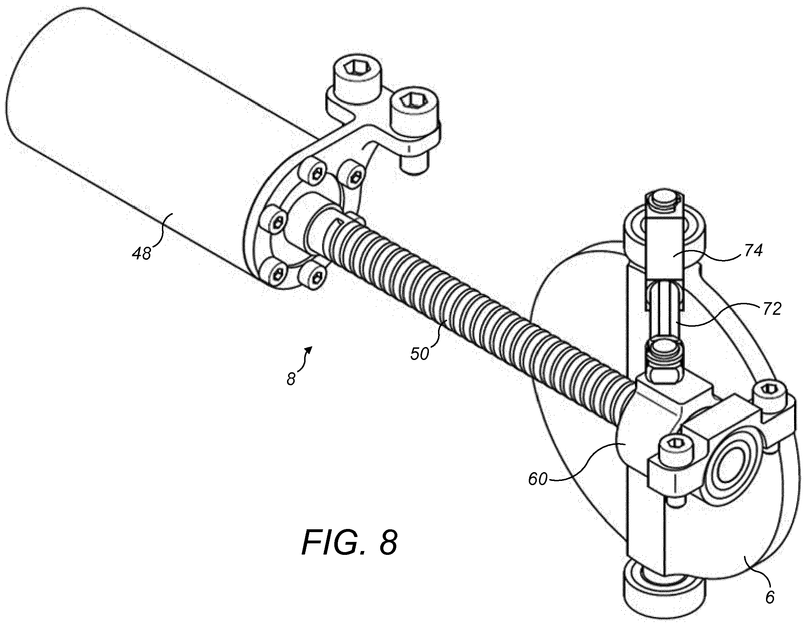

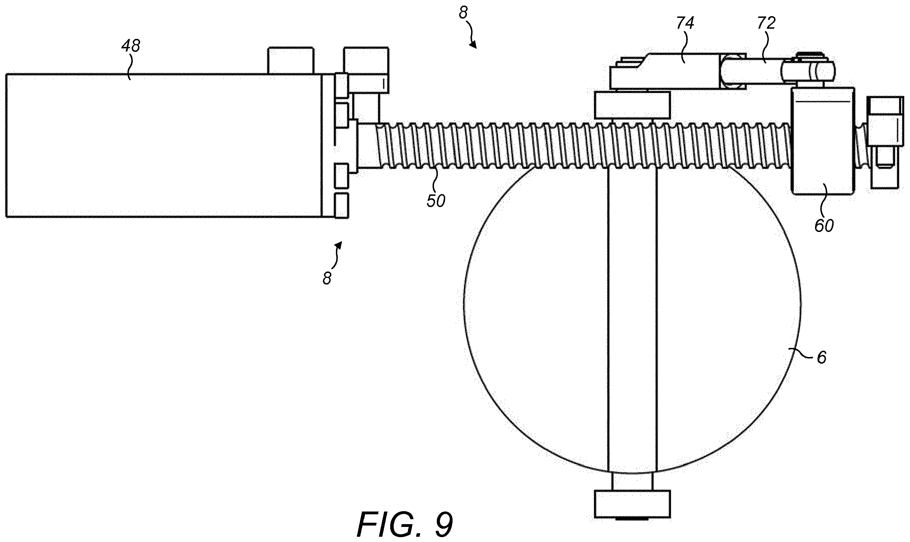

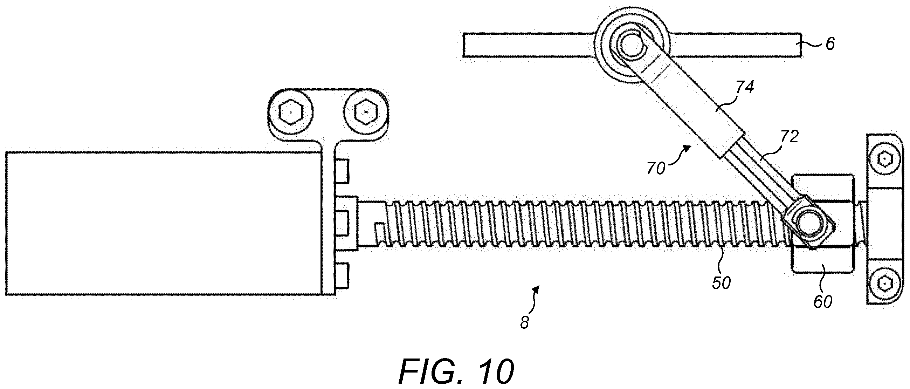

The valve assembly 2 illustrated in this embodiment is a butterfly valve, with the valve element 6 being a disc which is rotatable about an axis A within the flow passage 16 between a closed position (illustrated in Figures 5 to 7) in which the valve element 6 extends across the flow passage 16 to prevent flow through the flow passage 16 and an open position (illustrated in Figure 8 to 10) in which it is rotated through 90° so as to be positioned to edge-on to the flow to allow flow through the duct 16. The valve element 6 may also be moved to intermediate positions between the open position and the closed position so as to regulate the flow through the flow passage 16.

The valve element 6 is supported in the valve housing 4 by first and second trunnions 20, 22. The trunnions 20, 22 may be formed integrally with the valve element 6 or suitably attached thereto.

The first trunnion 20 is rotatably supported in a first bearing 24 mounted in a first recess 26 provided on the valve housing 4. The second trunnion 22 is supported in a second bearing 28 mounted in a second recess 30 of the valve housing 4. The second trunnion 22 comprises a coupling portion 32 for connection to the actuation mechanism 8 as will be described further below.

The actuation mechanism 8 comprises an electric rotary actuator 40 which is mounted in the actuator portion 12 of the valve housing 4 by means of a mounting bracket 42 fastened to a mounting boss 44 of the valve housing 4 by fasteners 46.

As can be seen from Figure 4, the actuation portion 12 of the valve housing 4 comprises an overhanging portion 38 which laterally overhangs the duct portion 10 of the valve housing 4. The actuator 40, and in particular its motor 48, is arranged at least partially within this overhanging portion 38, which allows the valve housing 4 to have a relatively low vertical profile.

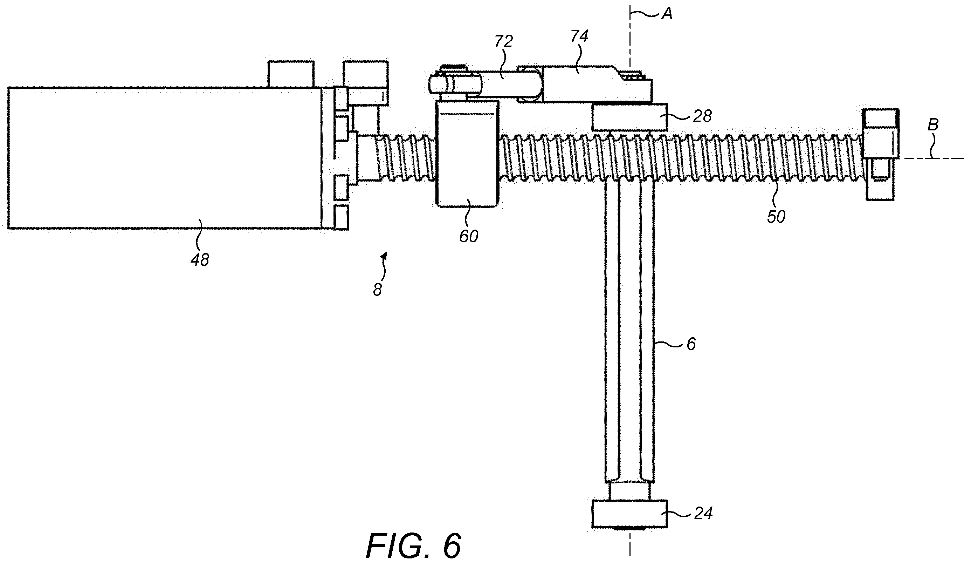

The rotary actuator 40 comprises a threaded drive spindle 50 extending from an electric drive motor 48. A distal end 52 of the drive spindle 50 is received in a bearing 54 which is mounted to the valve housing 4 by means of a mounting bracket 56. The mounting bracket 56 is attached to the valve housing 4 by means of fasteners 58. The longitudinal axis B of the drive spindle 50 is perpendicular to the rotational axis A of the valve element 6, as can best be seen from Figure 6.

The rotational speed of the drive motor 48 and the pitch of the drive spindle thread can be chosen to provide a desired rotational speed of the valve element 6.

An internally threaded drive nut 60 is threadably received on the drive spindle 50. The drive nut 60 comprises an upper surface 62 from which extends a cylindrical mounting pin 64. The mounting pin 64 may have an enlarged head or circumferential groove formed adjacent a distal end 66 for receiving a circlip 68.

A telescopic drive link 70 couples the drive nut 60 to the valve element 6.

The drive link comprises a first element 72 which is slidably received within a second element 74. In this embodiment, the first, inner element 72 is coupled to the drive nut 60 and the second, outer element linear rack gear 62 is coupled to the valve element 6. Of course, in other embodiments, inner and outer elements 72, 74 may be coupled to the valve element 6 and drive nut 60 respectively.

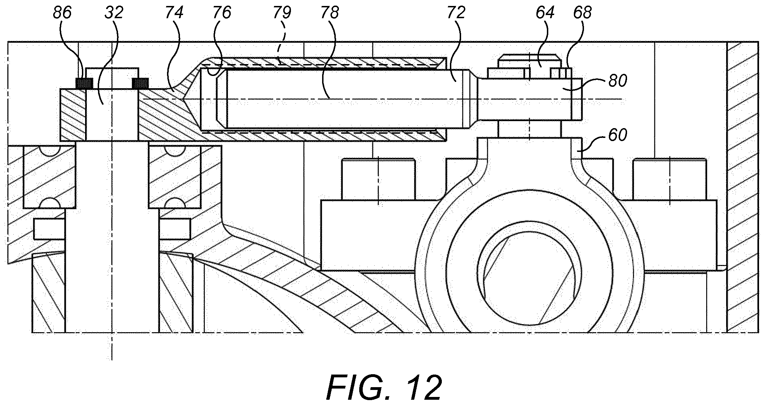

As can be seen from Figure 12, the second, outer element 74 has a bore 76 which slidably receives a shaft portion 78 of the first, inner element 72. The bore 76 and shaft portion 78 may have respective cross sections such that the shaft portion 78 may only slide, and not rotate within the bore 76. The bore 76 and shaft portion 78 may, most simply have circular cross-sectional shapes. Of course, this is not essential and the bore and shaft may non-circular complementary cross sections.

The first and second elements may be of any suitable materials. For example, both elements may be metallic. Other material combinations are possible, however, for example plastic-metal, plastic-plastic and so on.

If appropriate, for example in a metal-metal construction, a bearing, for example a sliding bearing, may be provided between the inner and outer elements 72, 74. The bearing could be, for example, comprise a coating or low friction liner provided on one or both of the shaft portion 78 and bore 76. A liner 79 is illustrated schematically in Figure 12.

The first element 72 further comprises a head 80 which has a circular opening 82 formed therethrough which is received over the mounting pin 64 of the drive nut so as to be rotatable or pivotable thereabout. The first element 72 is retained on the mounting pin 64 by the circlip 68, although other means of retaining the first element 72 may be used, for example a nut and washer. The first element 72 is therefore able to rotate around the axis of mounting pin 64, but is unable to rotate out of its own plane.

The second element 74 has a head 84 which is received over the coupling portion 32 of the valve element trunnion 22. As shown in Figure 5, for example, the head 84 is retained on the coupling portion by a circlip 86, although other retaining means, for example a nut and washer may be used. The coupling portion 32 of the second trunnion 22 and the head 84 may have any suitable drive coupling for example a D-shaped, square or splined coupling.

The telescopic link 70 lies generally horizontally, i.e. perpendicular to the axis A of the valve element 6 and parallel to the axis B of the drive shaft 50 and is retained in this plane by virtue of the relative positions of its mountings to the drive nut 60 and valve element 6 as shown, for example, in Figure 6. In this embodiment, the mounting locations are co-planar.

As mentioned above, the valve housing 4 is closed by a cover 14. The cover 14 may comprise an electrical connector 90 for connection of an electrical supply to the electric motor 48 of the actuator 40. Of course in other embodiments, the electrical connection may be provided on another part of the valve housing 4.

The operation of the valve will now be described with reference to Figure 5 to 10.

In the closed condition shown in Figures 5 to 7, the drive nut 60 is positioned adjacent to a proximal end of the drive spindle 50. As the drive spindle rotates, the drive nut 60 will move along the drive spindle 50. The drive nut 60 will only be able to move along drive spindle 50, and not about it, due to the telescopic linkage 70 which will prevent such a rotational movement of the drive nut 60. This is advantageous in that it avoids the need for any additional nut anti-rotation mechanism, thereby simplifying the mechanism.

Axial movement of the drive nut 60 along the drive spindle 50 causes the telescopic link 70 to rotate about the mounting pin 64, the telescopic link 70 then causing rotation of the valve element 6. As the drive nut 60 moves along the drive spindle 50, the distance between the nut mounting pin 64 and the valve element coupling 32 will vary. However, this variation is accommodated by the change in length of the telescopic link 70.

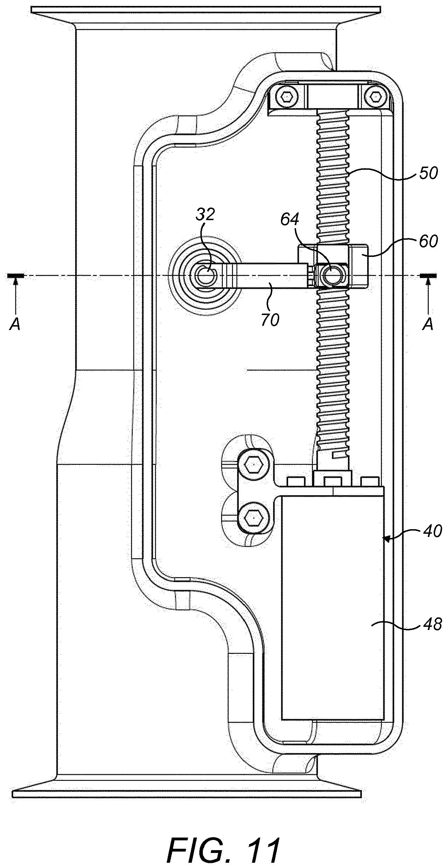

In the intermediate position illustrated in Figure 11, the drive nut 60 has moved to a mid-section of the drive spindle 50. The telescopic link 70 is at its shortest length at this point and has been rotated through 45°, this rotation being translated into a 45° rotation of the valve element 6, the valve then being partially open.

In its fully open position, illustrated in Figures 8 to 10, the drive nut 60 has moved to the distal end 62 of the drive spindle 50. The telescopic link 70 has been rotated through 90°, this rotation being translated into a 90° rotation of the valve element 6.

The speed of valve opening will be determined by the rotational speed of the actuator motor 48 and the pitch of the gear teeth 92, 94. Also, the valve element 6 may be stopped at any position intermediate its end positions to regulate flow through the duct 16. The use of an electric motor 48 facilitates this and may provide for accurate angular positioning of the valve element. For example, in certain embodiments, the motor 48 may be provided with a resolver which will accurately count the revolutions of the motor 48, thereby allowing accurate determination of the movement of the drive nut 60. In one example, a resolver may be mounted at an end of the motor 48.

It will be understood that in the embodiment illustrated, the rate of rotation of the telescopic link 70, and therefore the rate of rotation of the valve element 6 will be greatest when the link 70 is fully extended, i.e. when the drive nut 60 is at the respective ends of the drive spindle 50. This corresponds to positions in which the valve element is fully opened or fully closed. This may be advantageous to allow rapid initial movement of the valve element 6 from those positions. If a more constant opening speed is required, the speed of the motor 48 may be controlled appropriately.

The valve element 6 may be held in its operative position by suitable locking means. In some embodiments the drive spindle 50 may be locked in position by a mechanical lock (not shown). In another embodiment, the motor 48 may be locked electrically.

In addition, to prevent over rotation of the valve element 6, hard stops may be provided. For example, stops or bumpers may be provided which engage the drive nut 60 or telescopic link 70. The stops may be formed in, or mounted to, the valve housing 4 and/or on the mounting bracket 42 and mounting bracket 56, for example.

The disclosed embodiment may also be advantageous from a cost point of view as the individual components are easily sourced and may be easily assembled. Also, the arrangement may not need any liquid lubricants, leading to reduced maintenance and longer product life.

Also, it will be appreciated that the above is a description of just one embodiment of the disclosure and that various modifications may be made thereto without departing from the scope of the disclosure.

While described in the context of a butterfly valve, the disclosure has much broader application. For example, the actuation mechanism 8 may be used in other rotary valves such as port valves, or in any other equipment where a rotary actuation movement is required. Exemplary fields of application may include aircraft applications, for example in air conditioning systems and fluid control systems. However, the disclosure also has application to non-aircraft environments.

The embodiments described can easily be adapted to various applications by appropriate choice of components. For example, the speed of the drive motor 48 and the pitch of the drive spindle 50 can be chosen to provide the desired rotational speed of the valve element 6.

It will also be appreciated that the desired angle of rotation of the driven element such as the valve element 6 may be chosen to suit the particular application. This can be achieved by a suitable choice of the spindle pitch and length.

## Claims

1. A rotary valve assembly (2) comprising:
a valve element (6) rotatably mountable within a flow passage (16) for rotary motion between an open position in which it permits flow through the flow passage (16) and a closed position in which it blocks flow through the flow passage (16); and
an actuation mechanism (8) comprising a threaded drive spindle (50);
a threaded drive nut (60) received on said drive spindle (50) for movement along said drive spindle (50);
a telescopic drive link (70) having a first element (72) rotationally coupled to said drive nut (60) and a second element (74) rotationally fixedly coupled to said valve element (6) for rotationally driving said valve element (6), one of said first and second elements (72, 74) being telescopically received within the other of said first and second elements (72, 74);
a housing (4) comprising a duct portion (10) receiving said valve element (6) and an actuator portion (12) receiving said actuation mechanism (8), said duct portion (10) extending from an inlet to an outlet in an axial direction;
**characterised by** further comprising:
an electric drive motor (48) coupled to the threaded drive spindle; and in that the actuation portion (12) comprises a portion (38) overhanging a side of said duct portion (10), the drive motor (48) being at least partially arranged in said overhanging portion (38) and arranged to drive the threaded drive spindle (50) about a common axis also extending in the axial direction.

2. A rotary valve assembly as claimed in claim 1, wherein said actuator portion (12) is integral with said duct portion (10).

3. A rotary valve assembly as claimed in claim 1 or 2, further comprising a cover (14) removably closing said actuation portion (12).

4. A rotary valve assembly as claimed in claim 3, wherein said cover (12) comprises an electrical connector (90) for connection of a power supply to said electric drive motor (48).

5. A rotary valve assembly as claimed in any preceding claim, wherein said duct portion (10) comprises mounting flanges (18) at opposed ends thereof.

6. A rotary valve assembly as claimed in any preceding claim, wherein said first element (72) is slidably received within the second element (74).

7. A rotary valve assembly as claimed in any preceding claim, comprising a bearing (79) between said first and second elements (72, 74).

8. A rotary valve assembly as claimed in claim 7, wherein said bearing is a sliding bearing (79).

9. A rotary valve assembly as claimed in claim 8, wherein said bearing comprises a liner (79).

10. A rotary valve assembly as claimed in any preceding claim, wherein said drive nut (60) comprises a mounting pin (64) projecting therefrom, said first element (72) being pivotally mounted over said mounting pin (64).

11. A rotary valve assembly as claimed in any preceding claim, wherein said second element (74) is rotationally fixedly coupled with a coupling portion (32) of a drive shaft of said rotary element (6).

12. A rotary valve assembly as claimed in claim 11, wherein a non-circular section coupling is provided between said second element (74) and said coupling portion (32) of said rotary drive shaft.

## Patentansprüche

1. Drehschieberbaugruppe (2), umfassend:
ein Ventilelement (6), das drehbar innerhalb eines Strömungskanals (16) montiert werden kann, und zwar für eine Drehbewegung zwischen einer offenen Position, die eine Strömung durch den Strömungskanal (16) ermöglicht, und einer geschlossenen Position, die eine Strömung durch den Strömungskanal (16) blockiert; und
einen Betätigungsmechanismus (8), umfassend eine Antriebsspindel (50) mit Gewinde;
eine Antriebsmutter (60) mit Gewinde, die auf der Antriebsspindel (50) zur Bewegung entlang der Antriebsspindel (50) aufgenommen ist;
ein ausziehbares Antriebsgestänge (70) mit einem ersten Element (72), das drehbar mit der Antriebsmutter (60) gekoppelt ist, und einem zweiten Element (74), das drehfest mit dem Ventilelement (6) gekoppelt ist, um das Ventilelement (6) drehend anzutreiben, wobei eines des ersten und zweiten Elements (72, 74) ausziehbar innerhalb des anderen des ersten und zweiten Elements (72, 74) aufgenommen ist;
ein Gehäuse (4), umfassend einen Rohrabschnitt (10), der das Ventilelement (6) aufnimmt, und einen Betätigungselementabschnitt (12), der den Betätigungsmechanismus (8) aufnimmt, wobei sich der Rohrabschnitt (10) in einer axialen Richtung von einem Einlass zu einem Auslass erstreckt;
ferner **dadurch gekennzeichnet, dass** Folgendes umfasst ist:
ein elektrischer Antriebsmotor (48), der mit der Antriebsspindel mit Gewinde gekoppelt ist; und dadurch, dass der Betätigungsabschnitt (12) einen Abschnitt (38) umfasst, der eine Seite des Rohrabschnitts (10) überhängt, wobei der Antriebsmotor (48) zumindest teilweise in dem Überhangabschnitt (38) angeordnet ist und so angeordnet ist, dass er die Antriebsspindel (50) um eine gemeinsame Achse, die sich auch in die axiale Richtung erstreckt, antreibt.

2. Drehschieberbaugruppe nach Anspruch 1, wobei der Betätigungsabschnitt (12) einstückig mit dem Rohrabschnitt (10) ist.

3. Drehschieberbaugruppe nach Anspruch 1 oder 2, ferner umfassend eine Abdeckung (14), die den Betätigungsabschnitt (12) entfernbar schließt.

4. Drehschieberbaugruppe nach Anspruch 3, wobei die Abdeckung (12) einen Steckverbinder (90) umfasst, um eine Stromversorgung mit dem elektrischen Antriebsmotor (48) zu verbinden.

5. Drehschieberbaugruppe nach einem der vorstehenden Ansprüche, wobei der Rohrabschnitt (10) Montageflansche (18) an gegenüberliegenden Enden davon umfasst.

6. Drehschieberbaugruppe nach einem der vorstehenden Ansprüche, wobei das erste Element (72) gleitend innerhalb des zweiten Elements (74) aufgenommen ist.

7. Drehschieberbaugruppe nach einem der vorstehenden Ansprüche, umfassend ein Lager (79) zwischen dem ersten und zweiten Element (72, 74).

8. Drehschieberbaugruppe nach Anspruch 7, wobei das Lager ein Gleitlager (79) ist.

9. Drehschieberbaugruppe nach Anspruch 8, wobei das Lager eine Buchse (79) umfasst.

10. Drehschieberbaugruppe nach einem der vorstehenden Ansprüche, wobei die Antriebsmutter (60) einen davon vorstehenden Montagestift (64) umfasst, wobei das erste Element (72) schwenkbar über dem Montagstift (64) montiert ist.

11. Drehschieberbaugruppe nach einem der vorstehenden Ansprüche, wobei das zweite Element (74) drehfest mit einem Kopplungsabschnitt (32) einer Antriebswelle des Drehelements (6) gekoppelt ist.

12. Drehschieberbaugruppe nach Anspruch 11, wobei eine Kupplung mit nicht kreisförmigem Profil zwischen dem zweiten Element (74) und dem Kopplungsabschnitt (32) der sich drehenden Antriebswelle bereitgestellt ist.

## Revendications

1. Ensemble soupape rotative (2) comprenant :
un élément de soupape (6) pouvant être monté en rotation à l'intérieur d'un passage d'écoulement (16) pour un mouvement rotatif entre une position ouverte dans laquelle il permet l'écoulement à travers le passage d'écoulement (16) et une position fermée dans laquelle il bloque l'écoulement à travers le passage d'écoulement (16) ; et
un mécanisme d'actionnement (8) comprenant une broche d'entraînement filetée (50) ;
un écrou d'entraînement fileté (60) reçu sur ladite broche d'entraînement (50) pour un mouvement le long de ladite broche d'entraînement (50) ;
une liaison d'entraînement télescopique (70) ayant un premier élément (72) couplé en rotation audit écrou d'entraînement (60) et un second élément (74) couplé en rotation de manière fixe audit élément de soupape (6) pour entraîner en rotation ledit élément de soupape (6), l'un desdits premier et second éléments (72, 74) étant reçu de manière télescopique à l'intérieur de l'autre desdits premier et second éléments (72, 74) ;
un boîtier (4) comprenant une partie de conduit (10) recevant ledit élément de soupape (6) et une partie d'actionneur (12) recevant ledit mécanisme d'actionnement (8), ladite partie de conduit (10) s'étendant d'une entrée à une sortie dans une direction axiale ;
**caractérisé en ce qu'**il comprend en outre :
un moteur d'entraînement électrique (48) couplé à la broche d'entraînement filetée ; et **en ce que** la partie d'actionnement (12) comprend une partie (38) surplombant un côté de ladite partie de conduit (10), le moteur d'entraînement (48) étant au moins partiellement agencé dans ladite partie en surplomb (38) et agencé pour entraîner la broche d'entraînement filetée (50) autour d'un axe commun s'étendant également dans la direction axiale.

2. Ensemble soupape rotative selon la revendication 1, dans lequel ladite partie d'actionneur (12) fait partie intégrante de ladite partie de conduit (10).

3. Ensemble soupape rotative selon la revendication 1 ou 2, comprenant en outre un couvercle (14) fermant de manière amovible ladite partie d'actionnement (12).

4. Ensemble soupape rotative selon la revendication 3, dans lequel ledit couvercle (12) comprend un connecteur électrique (90) pour la connexion d'une alimentation électrique audit moteur d'entraînement électrique (48).

5. Ensemble soupape rotative selon une quelconque revendication précédente, dans lequel ladite partie de conduit (10) comprend des brides de montage (18) à des extrémités opposées de celles-ci.

6. Ensemble soupape rotative selon une quelconque revendication précédente, dans lequel ledit premier élément (72) est reçu de manière coulissante à l'intérieur du second élément (74).

7. Ensemble soupape rotative selon une quelconque revendication précédente, comprenant un palier (79) entre lesdits premier et second éléments (72, 74).

8. Ensemble soupape rotative selon la revendication 7, dans lequel ledit palier est un palier coulissant (79).

9. Ensemble soupape rotative selon la revendication 8, dans lequel ledit palier comprend un revêtement (79).

10. Ensemble soupape rotative selon une quelconque revendication précédente, dans lequel ledit écrou d'entraînement (60) comprend une goupille de montage (64) faisant saillie à partir de celui-ci, ledit premier élément (72) étant monté de manière pivotante sur ladite goupille de montage (64).

11. Ensemble soupape rotative selon une quelconque revendication précédente, dans lequel ledit second élément (74) est couplé de manière fixe en rotation avec une partie d'accouplement (32) d'un arbre d'entraînement dudit élément rotatif (6).

12. Ensemble soupape rotative selon la revendication 11, dans lequel un accouplement à section non circulaire est prévu entre ledit second élément (74) et ladite partie d'accouplement (32) dudit arbre d'entraînement rotatif.
